# DEMANDE DE BREVET EUROPEEN

(11) **EP 1 433 635 A1**
(43) Date de publication de la demande: **30.06.2004**
(21) Numéro de dépôt: 03364040.0
(22) Date de dépôt: 18.12.2003
(51) Int. Cl.: B60J 3/00, B60J 3/02

(54) **Palette de para-soleil pour véhicule et procédé de fabrication correspondant**

(30) Priorité: 18.12.2002 FR 0216219
(71) Demandeur: WAGON AUTOMOTIVE SNC, 79302 Bressuire Cédex (FR)
(72) Inventeur: Paille, Sébastien, 79150 Voultegon (FR)
(74) Mandataire: Bioret, Ludovic

(57) **Abrégé**

L'invention concerne un pare-soleil pour véhicule automobile, prévu pour être placé en regard d'une partie du pare-brise dudit véhicule pour éviter l'éblouissement, caractérisé en ce qu'il comprend au moins une palette présentant une ouverture obturée par une toile d'occultation.

## Description

Le domaine de l'invention est celui des équipements pour véhicule automobile. Plus précisément, l'invention concerne les palettes pare-soleil (ou, par simplification, les pare-soleil), généralement prévues dans les véhicules pour occulter une portion supérieure du pare-brise, pour éviter un éblouissement.

Ces palettes sont le plus souvent mobiles en rotation, entre une position escamotée (le long du pavillon) et une ou plusieurs positions d'occultation. Elles peuvent également être prévues pour être ramenées en regard d'une vitre latérale.

Elles présentent une surface pleine, en général de la couleur de l'habillage du véhicule, ou assortie à ce dernier, arrêtant les rayons du soleil (ou de toute autre source lumineuse). Les palettes sont relativement épaisses, et sont souvent prévus pour recevoir un miroir de courtoisie.

De tels pare-soleil sont relativement complexes à fabriquer, et donc coûteux. Il faut monter la structure de la palette, la recouvrir d'un habillage adapté au véhicule, prévoir les moyens assurant sa mobilité, loger et fixer le miroir de courtoisie,... En outre, il est parfois prévu que le miroir puisse être éclairé, ce qui suppose une alimentation électrique (sans nuire à la mobilité de la palette). On prévoit également souvent une trappe, par exemple coulissante, permettant de dissimuler le miroir lorsqu'il n'est pas utilisé.

Ceci conduit donc à un produit final relativement complexe, imposant de nombreuses contraintes aux constructeurs, et difficile à adapter et à modifier, tant sur le plan ergonomique que sur le plan esthétique.

Par ailleurs, ces palettes de type connu s'avèrent peu adaptées aux véhicules équipés d'un pare-brise panoramique, ou plus généralement d'une grande surface vitrée. Elles perturbent en effet la vue, en escamotant une portion de la zone de vision, les zones périphériques restant visibles. Elles sont en outre ni esthétiques, ni ergonomiques.

L'invention a notamment pour objectif de pallier ces différents inconvénients de l'état de l'art.

Plus précisément, un objectif de l'invention est de fournir une technique permettant de réaliser des pare-soleil de façon simple et peu coûteuse.

Un autre objectif de l'invention est de fournir une telle technique, permettant de réduire le poids des pare-soleil.

L'invention a également pour objectif de fournir une telle technique, permettant d'améliorer l'ergonomie des pare-soleil, et notamment la qualité de la vision globale pour le conducteur et les passagers.

Encore un autre objectif de l'invention est de fournir une telle technique, permettant le développement de nouveaux produits, tant sur le plan technique que sur le plan esthétique.

Ces objectifs, ainsi que d'autres qui apparaîtront par la suite, sont atteints selon l'invention à l'aide d'un pare-soleil pour véhicule automobile, prévu pour être placé en regard d'une partie du pare-brise dudit véhicule pour éviter l'éblouissement, et comprenant au moins une palette présentant une ouverture obturée par une toile d'occultation.

Il s'agit d'une approche tout à fait nouvelle des pare-soleil, qui peuvent être ainsi très léger et peu coûteux, présenter un aspect esthétique original, et présenter des caractéristiques spécifiques dues à la spécificité du tissu (transparence partielle par exemple).

Selon un mode de réalisation avantageux de l'invention, ladite palette comprend un cadre définissant d'une part son contour extérieur et d'autre part ladite ouverture.

Dans ce cas ledit cadre est avantageusement formé par l'assemblage de deux demi-coques en matière plastique. Ladite toile est quant à elle préférentiellement montée sur un cadre interne semi-rigide.

De façon avantageuse, dans ce mode de mise en oeuvre, ladite toile est prise en sandwich entre lesdites demi-coques.

Selon une autre caractéristique préférentielle, ledit cadre porte un axe coudé permettant la rotation dudit pare-soleil vers le pare-brise et/ou son déplacement vers une vitre latérale.

De façon avantageuse, ledit cadre porte également une lamelle ressort permettant son maintien dans une pluralité de positions.

Selon un aspect particulier de l'invention, dû à sa structure particulière, ladite toile peut avantageusement offrir un niveau prédéfini de transparence, permettant une légère visibilité tout en évitant l'éblouissement.

Cela est notamment intéressant, tant esthétiquement qu'ergonomiquement, pour les véhicules équipés d'un pare-brise de grande dimension et/ou d'un pavillon en verre.

L'invention concerne également un procédé avantageux de fabrication d'un pare-soleil pour véhicule automobile tel que décrit ci-dessus. Ce procédé comprend notamment une étape de montage d'une toile d'occultation dans une ouverture formée dans au moins une palette dudit pare-soleil.

A nouveau, on note que ce procédé est particulièrement simple, et permet de produire un pare-soleil léger, original et peu coûteux.

L'invention concerne encore les véhicules automobiles équipés d'au moins un pare-soleil pour véhicule automobile tel que décrit ci-dessus.

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés, parmi lesquels :
- la figure 1 présente une palette pare-soleil selon l'invention ;
- la figure 2 est une vue en éclaté de la palette pare-soleil de la figure 1 ;
- la figure 3 est un schéma synoptique simplifié du procédé de fabrication de la palette pare-soleil de la figure 1.

L'invention concerne donc un nouveau type de palette pare-soleil, beaucoup plus simple à fabriquer, et donc moins coûteux que les palettes pare-soleil de type connu, et présentant un poids réduit. En outre, les palettes de l'invention introduisent une nouvelle fonction avantageuse, à savoir celle de protéger des éblouissements, tout en laissant passer une partie de la lumière. Comme on le verra par la suite, ceci est particulièrement avantageux pour les véhicules présentant un pare-brise panoramique.

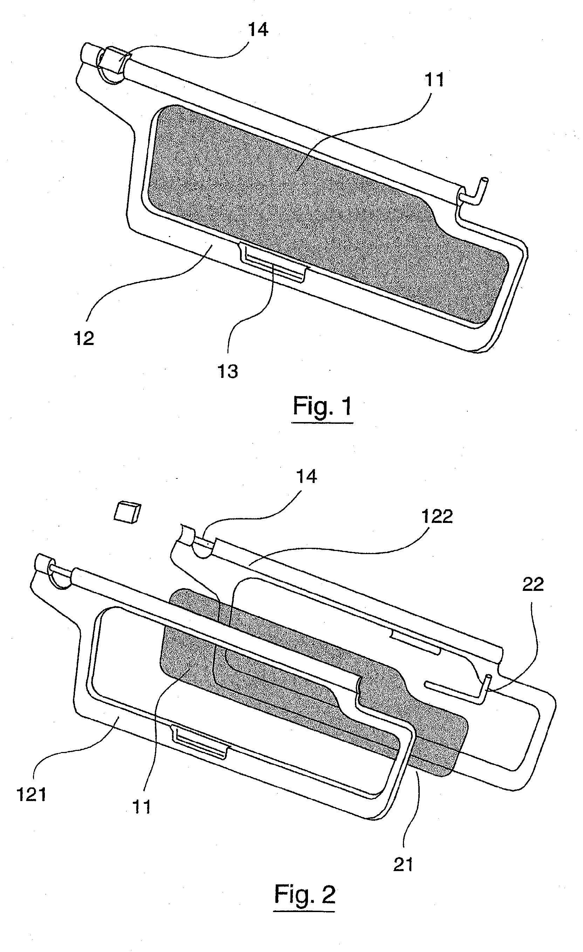

Pour cela, ainsi que ceci apparaît sur la figure 1, le pare-soleil de l'invention est formé essentiellement d'une toile tendue 11 (tissu). De façon préférentielle, cette toile présente un certain degré de transparence (c'est-à-dire qu'elle n'est pas complètement opaque), qui permet au conducteur ou à son passager de conserver une certaine visibilité, et donc une vision d'ensemble du pare-brise, tout en évitant bien sûr l'éblouissement du soleil, ou à tout autre source lumineuse. Il s'agit ici d'une approche tout à fait nouvelle des palettes pare-soleil, qui sont classiquement totalement opaques.

Selon le mode de réalisation illustré en figure 1, la palette présente un cadre extérieur 12, par exemple en matière plastique, qui intègre une poignée de préhension 13 et un axe de clippage 14 de la palette.

Comme cela apparaît plus clairement sur la vue en éclaté de la figure 2, ce cadre 12 est constitué de deux demi-coques 121 et 122. Ces deux demi-coques sont par exemple assemblées par soudage. Elles viennent prendre en sandwich la toile 11, préalablement tendu par sur un cadre semi-rigide 21.

Un axe coudé 22 permettant les rotations de la palette vers le pare-brise et latéralement vers la portière, est monté dans la partie supérieure du cadre 12. Des butées 23 et 24 permettent le maintien de l'axe coudé 22, en intégrant une lamelle ressort pour l'arrêt en rotation de la palette en toutes positions choisies par l'utilisateur.

L'invention permet ainsi la réalisation de façon très simple, d'un nouveau type de pare-soleil, permettant de développer de nouvelles solutions techniques, ergonomiques, esthétiques. Cette approche est notamment bien adaptée au cas où il n'est plus nécessaire de prévoir un miroir de courtoisie dans la palette de pare-soleil, parce que celui-ci a été prévu à un autre emplacement.

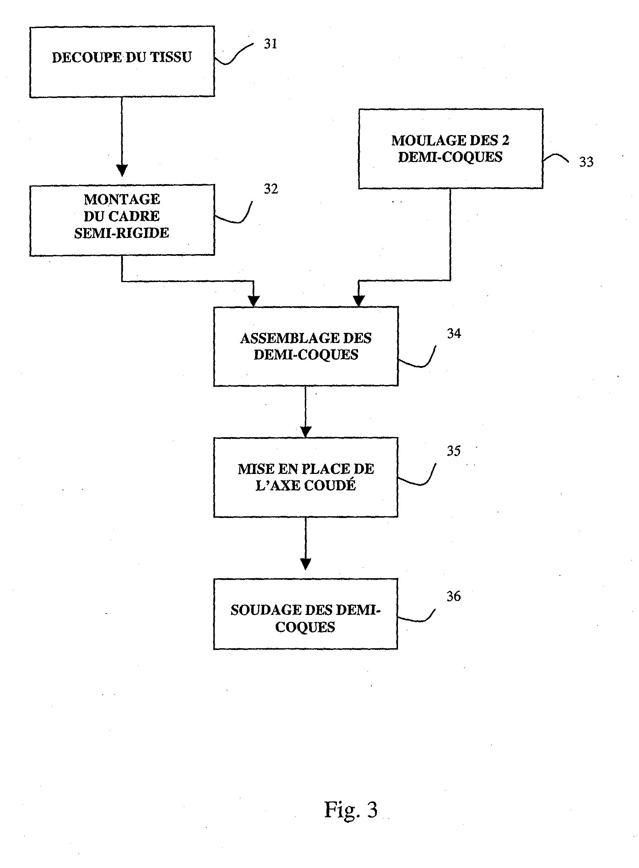

La fabrication et le montage d'un tel pare-soleil est pare-soleil très simple, comme cela apparaît sur le synoptique simplifié de la figure 3. On obtient tout d'abord la toile, ce qui suppose la découpe 31 du tissu au format souhaité, puis son montage 32 sur un cadre semi-rigide.

En parallèle, on fabrique, par exemple par moulage 33, les deux demi-coques.

Il suffit alors d'assembler (34), les deux demi coques, en prenant en sandwich la toile 11 montée sur son cadre semi-rigide 21. Dans le même temps, on met en place 35 l'axe coudé et les butées correspondantes.

Il ne reste plus alors qu'à souder 36 les deux demi-coques plastiques pour obtenir la palette de pare-soleil prête à être montée sur le véhicule.

Le montage sur le véhicule est également très simple, puisque aucune électrification n'est nécessaire. Il suffit de solidariser l'axe coudée 22 à la pièce de réception prévue à cet effet dans le véhicule.

## Revendications

1. Pare-soleil pour véhicule automobile, prévu pour être placé en regard d'une partie du pare-brise dudit véhicule pour éviter l'éblouissement, **caractérisé en ce qu'**il comprend au moins une palette présentant une ouverture obturée par une toile d'occultation.

2. Pare-soleil selon la revendication 1, **caractérisé en ce que** ladite palette comprend un cadre définissant d'une part son contour extérieur et d'autre part ladite ouverture.

3. Pare-soleil selon la revendication 2, **caractérisé en ce que** ledit cadre est formé par l'assemblage de deux demies-coques en matière plastique.

4. Pare-soleil selon la revendication 3, **caractérisé en ce que** ladite toile est montée sur un cadre interne semi-rigide.

5. Pare-soleil selon l'une quelconque des revendications 2 à 4, **caractérisé en ce que** ladite toile est prise en sandwich entre lesdites demies-coques.

6. Pare-soleil selon l'une quelconque des revendications 2 à 5, **caractérisé en ce que** ledit cadre porte un axe coudé permettant la rotation dudit pare-soleil vers le pare-brise et/ou son déplacement vers une vitre latérale.

7. Pare-soleil selon l'une quelconque des revendications 2 à 6, **caractérisé en ce que** ledit cadre porte une lamelle ressort permettant son maintien dans une pluralité de positions.

8. Pare-soleil selon l'une quelconque des revendications 1 à 7, **caractérisé en ce que** ladite toile offre un niveau prédéfini de transparence, permettant une légère visibilité tout en évitant l'éblouissement.

9. Procédé de fabrication d'un pare-soleil pour véhicule automobile, prévu pour être placé en regard d'une partie du pare-brise dudit véhicule pour éviter l'éblouissement, **caractérisé en ce qu'**il comprend une étape de montage d'une toile d'occultation dans une ouverture formée dans au moins une palette dudit pare-soleil.

10. Véhicule automobile, **caractérisé en ce qu'**il comprend au moins un pare-soleil pour véhicule automobile, prévu pour être placé en regard d'une partie du pare-brise dudit véhicule pour éviter l'éblouissement, comprenant au moins une palette présentant une ouverture obturée par une toile d'occultation.
